(19) Europäisches Patentamt
European Patent Office
Office européen des brevets

(11) **EP 2 580 339 B1**

(12) **EUROPEAN PATENT SPECIFICATION**

(45) Date of publication and mention
of the grant of the patent:
**04.12.2019 Bulletin 2019/49**

(21) Application number: **11777627.8**

(22) Date of filing: **05.05.2011**

(51) Int Cl.:
***C12P 7/00*** *(2006.01)*  ***C10L 1/00*** *(2006.01)*
***C12M 1/00*** *(2006.01)*

(86) International application number:
**PCT/NZ2011/000065**

(87) International publication number:
**WO 2011/139164 (10.11.2011 Gazette 2011/45)**

(54) **PROCESS FOR PRODUCTION OF BIOFUELS**

VERFAHREN ZUR HERSTELLUNG VON BIOKRAFTSTOFFEN

PROCÉDÉ DE PRODUCTION DE BIOCARBURANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.05.2010 US 332334 P**

(43) Date of publication of application:
**17.04.2013 Bulletin 2013/16**

(73) Proprietor: **Solray Holdings Limited**
**Christchurch 8011 (NZ)**

(72) Inventor: **BATHURST, Christopher Francis**
**Christchurch 8023 (NZ)**

(74) Representative: **Barton, Russell Glen**
**Withers & Rogers LLP**
**4 More London Riverside**
**London SE1 2AU (GB)**

(56) References cited:
**WO-A1-2010/030197      WO-A2-2008/134836
WO-A2-2009/064204      WO-A2-2009/071541
US-A1- 2008 274 494     US-A1- 2009 081 742
US-A1- 2009 126 274     US-A1- 2009 148 918
US-A1- 2009 181 438     US-A1- 2010 050 502
US-A1- 2010 261 922     US-B2- 6 589 422**

• **YANG, Y.F. ET AL.: 'Analysis of energy
conversion characteristics in liquefaction of
algae' RESOURCES CONSERVATION &
RECYCLING vol. 43, no. 1, 2004, pages 21 - 33,
XP004618325**

**EP 2 580 339 B1**

**Description**

**FIELD**

This disclosure relates to systems and methods for the treatment of organic feedstock to produce useful fuels and systems and methods for the removal of contaminants from contaminated raw material.

**BACKGROUND**

The sustainability and environmental suitability of conventional fuel sources have become a concern. Because of the increasing environmental concerns associated with the combustion of hydrocarbons and the variable cost of oil, the suitability of alternative fuels is being investigated and is gaining acceptance. The use of raw materials, such as algae, for production of hydrocarbons is a promising alternative.

A certain amount of water is required for the reaction process in the conversion of biomatter to hydrocarbons. Therefore any surplus water that can be efficiently removed should be separated early to improve both the efficiency and the production rate of the super critical reaction plant.

Mechanical methods of concentration such as pressure filtration, centrifugation, or flotation work well for concentrations of up to about 11%. Beyond this level of concentration, algae sludge contains a much more significant amount of water within the cell membrane or inside the propelling hair-like arms which hold each cell away from neighboring cells. This water is difficult to remove mechanically and often other more energy intensive methods are needed such as evaporation. During the evaporation process the cells become more tightly bound together, and the resultant sludge rapidly becomes too stiff to pump after evaporation of water from algae. Typically, further concentration of algae is not achievable as the majority of the residual water remains contained within the algae cell walls.

Other known methods for the concentration of algae and other organic feedstock - such as radio waves and ultrasonics - are inefficient, energy intensive and to do not allow the possibility to recover energy by regeneration.

Improved systems, processes, methods and compositions for the treatment of organic feedstock to produce useful fuels are herein disclosed.

Further background information can be found in WO 2009/064204, which describes a system and process for treating a raw material to reduce the level of a contaminant in the raw material or to form a raw product that can be used to produce a fuel. WO 2010/030197 discloses a method for concentration of algal biomass that is readily separable from water.

**SUMMARY**

In a first aspect, the invention provides a continuous process of producing fuel from an organic feedstock comprising algae, the process comprising the steps of:

pre-processing the organic feedstock to increase the concentration of the algae to greater than or equal to 30% by weight of the organic feedstock, wherein the pre-processing steps comprise:

(a) pre-heating the organic feedstock by passing the feedstock through a heat exchanger and then further heating the organic feedstock to a desired temperature for a period of time so as to effectively disintegrate the cells walls of the algae;
(b) cooling the heated organic feedstock by passing the feedstock backwards through the heat exchanger; and
(c) removing excess water from the organic feedstock in a decanter to produce a concentrated pumpable organic feedstock of about 30-50% algae; and

further processing the concentrated pumpable organic feedstock by:

(d) adding at least one additive to the pre-processed organic feedstock; and
(e) processing the pre-processed organic feedstock by pressurizing and heating the pre-processed organic feedstock to convert at least a portion of the algae to a fuel; and
(f) extracting the fuel from the pre-processed and processed organic feedstock.

Also disclosed herein is a process for treating an organic feedstock. The organic feedstock including a convertible component is preprocessed to increase the concentration of the convertible component. The organic feedstock is processed to convert at least a portion of the convertible component to a fuel and the fuel is extracted from the organic feedstock.

The foregoing and other objects, features and advantages of the present disclosure will become more readily apparent from the following detailed description of exemplary embodiments as disclosed herein.

## BRIEF DESCRIPTION OF THE DRAWINGS

The following drawings form part of the present specification and are included to further demonstrate certain aspects of the present disclosure. The disclosure may be better understood by reference to one or more of these drawings in combination with the detailed description of specific embodiments presented herein.

FIG. 1 is a diagrammatic view of an exemplary system for preprocessing waste and/or organic material according to one embodiment;

FIG. 2 is a flowchart of an exemplary method for processing waste and/or organic material according to one embodiment;

FIG. 3 is a diagrammatic view of an exemplary system for extracting fuel from an organic feedstock according to one embodiment;

FIG. 4 is a diagrammatic view of an exemplary system for processing waste and/or organic material according to another embodiment; and

FIG. 5 is a diagrammatic view of an exemplary system for processing waste and/or organic material according to one embodiment.

## DETAILED DESCRIPTION

The invention is defined by the appended claims.

This disclosure relates to systems and methods for the treatment of organic feedstock to produce useful hydrocarbons and alternative fuels and systems and methods for the removal of contaminants from contaminated raw material. For simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein can be practiced without these specific details. In other instances, methods, procedures and components have not been described in detail so as not to obscure the embodiments described herein.

The present disclosure provides exemplary systems, processes and methods for producing alternative fuels and removing contaminant from organic feedstock such as, algae. Algae can be utilized as the starting biomass to treat wastewater during the production of fuel. The water removed from the algae during concentration of the algae is of freshwater quality. High rate algal ponds provide more efficient nutrient removal and disinfection than oxidation ponds and are more cost effective than mechanical wastewater treatment systems. Algae's ability to act as a bioremediation agent allows the treatment of wastewater while generating bio-crude. Algae also absorb $CO_2$. Therefore, algae are useful organic feedstock for the systems, processes and methods herein disclosed.

For clarity, the term "high pressure", when used in this specification and claims, refers to pressures above 100 bar.

The term "charge", when used in this specification and claims, refers to a preset volume of feedstock.

The term "pregnant solvent', when used in this specification and claims, refers to solvent which contains another substance dissolved therein.

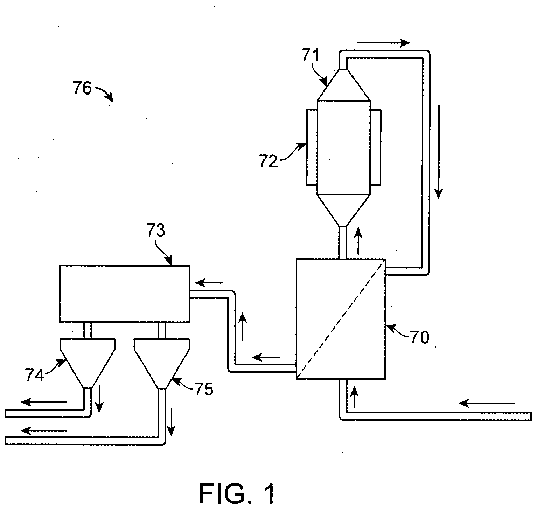

FIG. 1 is a diagrammatic view of an exemplary system 76 for preprocessing waste and/or organic material according to one embodiment. In an exemplary embodiment the organic material is an algae feedstock. Delignitized timber can be used in the feedstock with other raw materials that require some mechanical/thermal or chemical processing to break them down into a pumpable form of feedstock or slurry, while other materials will require only the addition of water. The processes that could be used to break down the raw materials may include one or more of grinding, shredding, crushing, liquification, heating, chemical or thermal decomposition or other means. Mechanical and/or non-mechanical apparatus can be used to destroy algae cell membrane, extract a predetermined quantity of the intercellular water and to increase the concentration of algae in organic feedstock to a prescribed level.

In an exemplary embodiment, the apparatus for pre-processing and concentrating algae in organic feedstock includes a countercurrent heat exchanger, a heater for achieving suitable/controlled residence time therein at known/optimum levels and a decanter for removing water separated from the remainder algae bio-mass within the organic feedstock.

The concentration of algae in a source pond is usually around 0.01%. Algae can be harvested by simple gravity settling at a concentration of between 1-10%. The algae typically aggregates (bioflocculate), making it possible to harvest using gravity settling. In an exemplary embodiment, the concentration of algae in feedstock after initial harvesting and prior to preprocessing is 3%. Typically, further concentration of algae beyond 3-10% algae content is prevented because the majority of the residual water is contained within the algae cell walls.

In order to concentrate the algae to 35-50%, the algae is pumped as part of a continuous process to a concentrator which preheats the algae in the heat exchanger 70 optimally to about 55° C and subsequently brings the algae to the desired temperature in a heater 71 for a period of time (for example, over 75°C for approximately 90 seconds). The heat exchanger 70 can be a tall single pass shell and tube heat exchanger or other heat exchanger known in the art. The heater can be equipped with a heating jacket 72 for heating and or insulating the heater 71. The cell walls can be effectively disintegrated using heat to change the protein structure of the cell wall.

In an exemplary embodiment, the heat exchanger 70 has an estimated heat transfer coefficient of 30 $W/m^2K$, an expanded area of 25 $m^2$ and is capable of processing up to 10 L/min organic feedstock including algae. Organic feedstock can be heated to a temperature above 70°C for approximately 90 seconds.

The organic feedstock is cooled before entering a decanter 73 and discharged at a temperature of 30°C. The organic feedstock is cooled by passing it backwards through the heat exchanger 70. The organic feedstock is then passed into the decanter 73 and concentrated to 30-50%. Concentrated algae can be recovered in an algae recovery tank 74 and water removed from the algae can be recovered in a water recovery tank 75. The water removed during decanting can be returned to the algae ponds. The algae concentration of the organic feedstock can be increased to about 50 percent with efficient pumping characteristics.

In an exemplary embodiment, high shear and/or high centrifuge means (not shown) can be used to separate biosolids from the residual water within the organics feedstock. Yields of 30-50% algae in water can be achieved to generate an efficiently pumpable concentrated organic feedstock. Separation can also be achieved by a cake filter press (not shown).

Once the cell wall has disintegrated and the excess water removed, the small amount of lipid present in the cell starts to act as a lubricant and the sludge behaves like slime, which is relatively easy to pump. The product of preprocessing waste and/or organic material in accordance with the system of FIG. 1 is a concentrated pumpable organic feedstock. The pumpable concentrated organic feedstock can be further processed to remove contaminants, vary particle size and/or produce a product containing crude oil and/or hydrocarbons in one or more exemplary system processes herein disclosed.

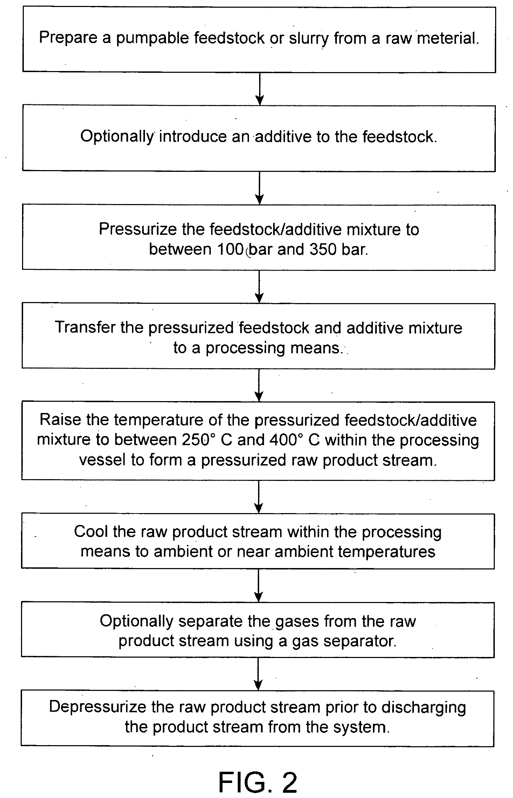

FIG. 2 is a flowchart of an exemplary method for processing waste and/or organic material according to one embodiment. A concentrated pumpable organic feedstock can be prepared by preprocessing waste and/or organic material in accordance with the system of FIG. 1 The concentrated pumpable organic feedstock can be pumped into a pressurizing chamber and the pressure can be raised to between 100 and 350 bar. A pressurized algae feedstock can be introduced into a processing means or reaction chamber where the temperature is raised to between 250 and 400°C, cooled to ambient or near ambient temperature, and depressurized before releasing a raw product stream from the system. The raw product stream is cooled to a temperature below 80°C and more preferably below 50°C before release from the system. Gases can be separated from the raw product stream using a gas separator.

Additionally, or alternatively other materials can be introduced to achieve a variation in particle size of the concentrated pumpable organic feedstock. Where the raw material represents the smallest particle, other material represents larger particles (and vice versa) in the organic feedstock. However, the addition of other material or additives (e.g. calcium carbonate) to the concentrated pumpable organic feedstock can also have beneficial effect on the product of the thermal treatment process.

Additives are added to the algae before pressurization. The additives include, but are not limited to catalysts such as sodium carbonate, sodium hydroxide or calcium salt. The additives can further be selected from the group consisting of carbonates, hydroxides, bicarbonates, and similar bases. In an exemplary embodiment, about 5% sodium carbonate is mixed with the concentrated pumpable algae feedstock before pressurizing. In another exemplary embodiment, greater than 5% sodium carbonate is mixed with the concentrated pumpable algae feedstock before pressurizing. For example, the concentrated pumpable algae feedstock can be combined with a mixture of sodium carbonate and calcium carbonate - whereby the catalysts enable the yield or composition of the product to be favorably improved. Within the process, preferably as generally described in WO2009/064204, corrosion is favorably handled by varying the pH, preferably between pH 7-9. The concentrated pumpable organic feedstock and optionally the catalyst can be passed into a reactor wherein reaction in the processing means or reaction chamber converts algae within the feedstock to crude oil. The raw product from the system of FIG. 2 can further processed in exemplary system processes herein disclosed.

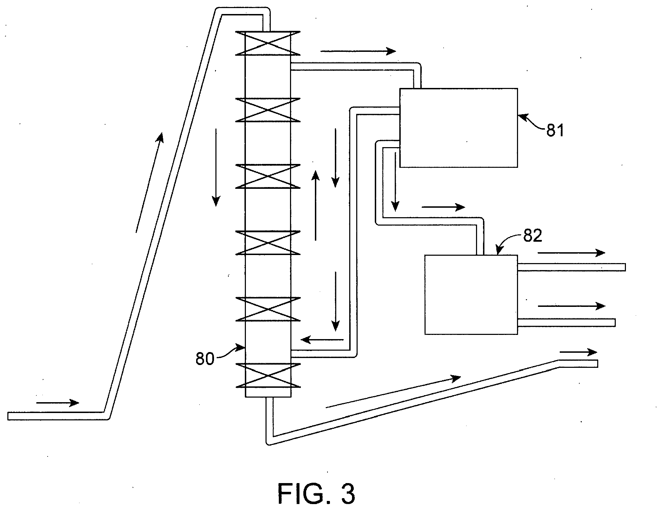

FIG. 3 is a diagrammatic view of an exemplary system for extracting fuel from an organic feedstock according to one embodiment. A raw product including, but not limited to algae, crude oil, hydrocarbons and/or water can be produced in accordance with the process of FIG. 2. This raw product can be used as organic feedstock for the system of FIG. 3. The organic feedstock can include but is not limited to crude oil, hydrocarbons, algae and water. Crude oil and/or hydrocarbons can be extracted or separated from the organic feedstock. This extraction process is useful where there is a need to soak the feedstock in a solvent and separation of the solvent and the organic feedstock cannot be achieved through filtration or straining. The organic feedstock can be cooled prior to crude oil being extracted.

A vertical column 80 incorporating a series of equally spaced low obstruction full flow ball, gate, and/or knife valves can be used to extract or separate crude oil and/or hydrocarbons from the organic feedstock with the use of a solvent. The organic feedstock is preferably of higher specific gravity than the solvent introduced to extract crude oil from the feedstock. This can be arranged by either preparing the organic feedstock to have a greater specific gravity or by preparing the solvent to have a lower specific gravity. In an exemplary embodiment, the solvent has a specific gravity of less than 0.80.

A light hydrocarbon solvent such as hexane can be used to separate or extract the crude oil from the organic feedstock. Other solvents that can be used include, but are not limited to, gasoline, kerosene, ethylene, propylene, or butene-1; branched or straight chained aliphatic hydrocarbons such as ethane, propane, butane, isobutane, pentane, hexane, heptane, octane, 2,2-dimethylbutane, 2,3-dimethylbutane, 2,2-dimethylheptane, 2,5-dimethylhexane, 2,2-dimethylpentane, 2,3-dimethylpentane, 2,4-dimethylpentane, 3,3-dimethylpentane, 3-ethylpentane, hexamethylethane, 2-methylbutane, 2-methylhexane, 2-methylpentane, and 3-methylpentane; alicyclic hydrocarbons such as cyclohexane, methylcyclopentane, and 1,2,3,4-tetrahydronaphthalene; liquid alpha-olefins such as hexene-1, heptene-1, octene-1, nonene-1, decene-1, and 4-methyl-1-pentene; and aromatic hydrocarbon derivatives such as benzene, toluene, or xylene. In an exemplary embodiment, a light hydrocarbon with a boiling point of equal to or less than 120° C is used to separate crude oil from the organic feedstock.

A specific valve configuration within a vertical column 80 can be used to extract crude oil and/or hydrocarbons from the organic feedstock. Where there is a pressure difference on either side of the valve, the valve rapidly wears and the seal fails. These effects can be avoided when the pressure is equalized across the valve before the valve opens, for example, via an auxiliary valve such as a needle valve, comprising a small diameter needle which moves in and out of an orifice. However, where the pressurized fluid contains hard particles, such as silicates, the valves are also eroded. Furthermore, the incorporation of slave cylinders on either side of the needle valve reduces the erosion and maintains the integrity of the seal maintained. In effect, the valve then only needs to work with a clean liquid and the pressure only carried through to the 'dirty' liquid, or liquid containing particles, through the slave piston.

The column 80 includes a series of integrated valves that can be equally spaced. The organic feedstock comprising algae, crude oil and/or hydrocarbons is introduced, preferably pumped, into the top of the column 80 with valves incorporated for phase separation. Algae are typically less than 1 micron and therefore separation occurs by utilizing a difference in specific gravity or weight of the constitutions to be separated. The solvent is introduced, preferably pumped, into the bottom of the column 80. Simultaneous sequencing of the valves affects the rise of the solvent and the descent of the feedstock. This movement can be effected by opening every second valve, except for the highest and the lowest valves. This sequencing of valves creates a series of double sized chambers, which allows the feedstock to descend through the open valve space to the lower end of each double chamber.

Where a solvent is displaced by the movement of the feedstock, the solvent moves upwards to the upper end of each double chamber, generally through the falling feedstock. After a period of consolidation, which may be for example ten minutes but could be longer or shorter depending on material characteristics, the open valves close, and the other of every second valve opens to create a new series of double chambers to repeat the process.

The sequenced opening and closing of valves effects a gradual sequential movement of organic feedstock downward through the solvent medium/media in the column 80. The counter current flow of solvent and feedstock generates a heavily pregnant solvent at the top of the column 80 and a clean feedstock at the bottom of the column 80. The cleansed feedstock generated at the bottom of the column 80 can be used as fertilizer.

Following an optimum processing period, the lowest valve in the cycle can be opened to deposit the spent feedstock from the bottom of the column 80, and the vacated space is filled with fresh solvent. Also at the optimum period, the top valve can be opened to allow the heavily pregnant solvent to be collected. The vacated space is then filled with a load of fresh organic feedstock. The continuous nature of the column is more economical than batch processing.

The heavily pregnant solvent can includes crude oil, water and/or hydrocarbons that can be separated into fractions and recovered by distillation means 81. In an exemplary embodiment, distillation is performed at 120° C to produce crude oil and water. A separation means 82 such as distillation can be used to separate the crude oil into useful fractions, such as petrol, diesel, bitumen, compressed natural gas (CNG), liquefied natural gas (LNG) and waxes.

Downstream processes include the separation of fuel gases and acid gases in a separation column designed to divert the gases (typically the fuel gases), which do not dissolve in water at the elevated pressures. These gases are diverted to a gas cleaning and purification plant before being utilized within a gas network. One or more of the gases, hydrogen sulfide ammonia and/or carbon dioxide, is independently directed back to the high rate algae growth ponds as an essential feedstock. Surplus gas can be used to fuel a gas turbine and generate electricity. The exhaust from the gas turbine can reach 400°C and greater and can be used for process heat in one or more stages of the processes herein disclosed.

It should be noted that the systems and processes herein disclosed can be used to remove contaminants from feedstock or to produce a product containing hydrocarbons or crude oil that may be suitable for use as a fuel.

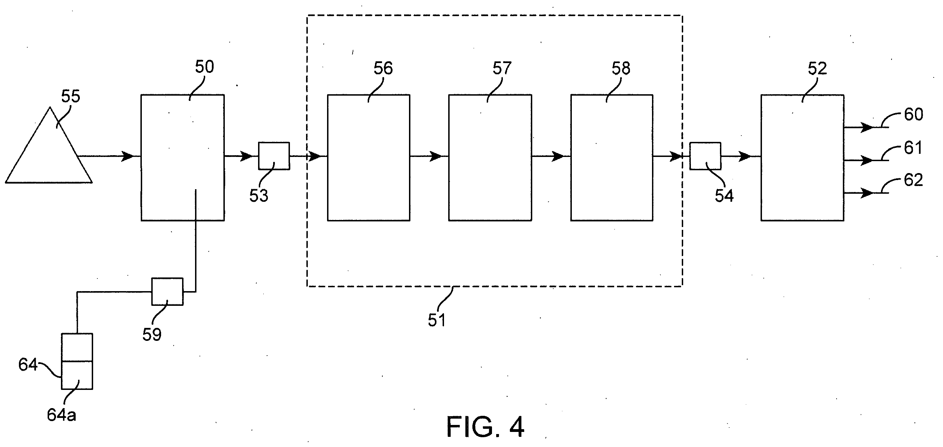

FIG. 4 is a diagrammatic view of an exemplary system for processing waste and/or organic material according to another embodiment. The system can include a preparation stage 50, a processing stage 51, and a separation stage 52. The preparation stage 50 can convert a raw material 55 to be processed into a pumpable organic feedstock 53 or slurry.

The raw material 55 can be concentrated algae in water prepared by preprocessing waste and/or organic material in accordance with the system of FIG. 1. The raw material 55 can be any organic or contaminated material. When using algae as a raw material, a concentration of 1% and 50% algae raw material can be used to produce a pumpable feedstock 53. Delignitized timber can be used in the feedstock 53 with other raw materials 55 that require some mechanical/thermal or chemical processing to break them down into a pumpable form of feedstock 53 or slurry, while other materials will require only the addition of water. The processes that could be used to break down the raw material 55 can include one or more of grinding, shredding, crushing, liquification, heating, chemical or thermal decomposition or other means.

In an exemplary embodiment, one or more additive(s) 64a from an additive tank 64 can be added to the raw material 55 in the preparation stage 50 via additive pump 59 to form an organic feedstock 53.

The processing stage 51 pressurizes and heats the organic feedstock 53 to predetermined optimal temperatures and pressures to cause a reaction in the feedstock 53. A raw product 54 is produced by heating and pressurizing the feedstock 53 in the processing stage. The processing stage can include a pressurizing section 56, a processing section 57 and an output section 58. The pressurizing section 56 pressurizes the organic feedstock 53. The processing section 57 heats the pressurized organic feedstock 53 and cools the resultant raw product stream. The output section 58 depressurizes and outputs the raw product 54. The raw product 54 can be cooled and depressurized in a controlled manner. The raw product can contain a desirable product produced in the processing section 57 or can be a material that is free from, or has a lower level of, contaminants that were removed.

In the separation stage 52, gas can be separated from the raw product 54. The discharged raw product stream 54 is passed through a product separator to be separated into one or more product sub-streams 60, 61, and 62. This may be achieved by solvent extraction as described with respect to FIG. 3, distillation, settling, membrane filtration, centrifugation, decantation, ion exchange, drying, evaporation, vacuum distillation or any other suitable separation process or combination of processes as would be readily apparent to a person skilled in the art.

In an exemplary embodiment, product sub-streams 60, 61, 62 including a hydrocarbon oil rich stream are produced. The hydrocarbon oil rich stream can be used in place of crude oil or similar product for producing materials such as diesel, aviation fuel, lubricating oil, petrol, or similar products.

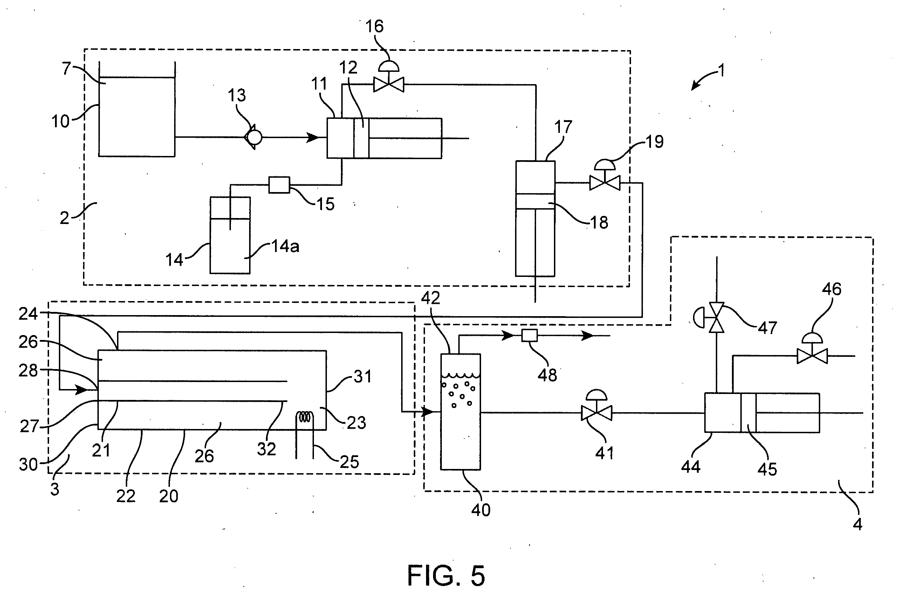

FIG. 5 is a diagrammatic view of an exemplary system 1 for high pressure, high temperature processing of waste and/or organic material according to one embodiment. The feedstock 7 for the system 1 of FIG. 5 can be a concentrated algae feedstock prepared by preprocessing waste and/or organic material in accordance with the system of FIG. 1. The feedstock 7 can be algae or any organic or contaminated material. Other materials, such as delignitized timber can be used as feedstock 7. Many raw materials that can be used as feedstock require some mechanical/thermal or chemical processing to break them down into a pumpable form of feedstock or slurry, while other materials will require only the addition of water. The processes that could be used to break down the raw materials can include one or more of grinding, shredding, crushing, liquification, heating, chemical or thermal decomposition or similar.

The system 1 includes a pressurizing section 2 in which feedstock 7 enters the system and is pressurized before being processed by the processing section 3. The pressurizing section 2 includes a feed tank 10 connected to a first pump 11 via a conduit on which is located a nonreturn valve.

A first pump 11 includes a first ram 12 that moves up and down within a cylinder and that is driven by any suitable means. However, if alternative forms of pump are used, the ram can be replaced with other suitable pumping means as would be apparent to a person skilled in the art. Other pumping means can include high pressure pumps that are used today to convey a solid-liquid mixture under high pressure or extruding screws can be used for handling larger particle sizes within the feedstock 7.

The first pump 11 is configured to draw feedstock 7 from the feed tank 10 and provide an initial low pressurization. For example, the feedstock 7 can be drawn from the feed tank 10 by moving the ram 12 to create a vacuum. This causes the feedstock 7 to move from the feed tank 10 to the first pump 11 via a conduit and non-return valve 13. The non-return valve 13 prevents the feedstock 7 from moving back toward the feed tank 10.

The pressurizing section 2 also contains an additive tank 14 adapted to contain an additive 14a. The additive tank 14 is connected with an additive pump 15 that pumps one or more additives 14a to the first pump 11 via a conduit that connects the additive tank 14 to the first pump 11. This creates a feedstock 7 and additive 14a mixture in the first pump 11.

A first valve 16 is positioned on a conduit connected with the first pump 11 and with pressurizing means, in the form of a second pump 17. The first valve 16 can be closed to allow the first pump 11 to mix the feedstock 7 with the additive 14a within the pump 11, and the valve 16 can be opened to allow the feedstock/mixture to be pumped from the first pump 11 to the second pump 17 via the conduit.

The second pump 17 is a high pressure pump that includes a pump housing in the form of a cylinder within which a second floating piston or ram 18 is located. The second ram 18 is able to slide back and forth along the cylinder in the usual manner. If alternative forms of pump are used, the ram may be replaced with other pumping means, such as an extruding screw or other device as would be apparent to a person skilled in the art.

The second pump 17 is configured to pressurize the feedstock 7. In particular, the pump 17 is configured so that one side of the ram 18 is adapted to be in contact with a pure fluid, such as pure water, which has been pressurized independently by a conventional separate pumping system (not shown) connected with the second pump 17. The other side of the ram 18 is adapted to be in contact with the feedstock 7 or feedstock 7 and additive mixture 14a held within the cylinder or pump housing.

The system 1 works by pumping the feedstock 7 into the cylinder of the second pump 17 by opening the first valve 16 and actuating the first pump 11. As the feedstock/mixture enters the second pump 17, the second ram 18 is caused to move along the cylinder and push the pure fluid out from the other end of the cylinder and into a reservoir (not shown) via an open release valve (not shown).

The second pump 17 is also connected with a second valve 19. After the feedstock 7 is pumped into the second pump 17 by the first pump 11, the first and second valves 16 and 19 are closed.

The pure fluid remaining in the second pump 17 is then pressurized by a separate pump (not shown). This causes the ram 18 to transmit the pressure of the fluid by pushing against the feedstock/mixture, thereby pressurizing the feedstock/mixture in an indirect way. The second valve 19 can then be opened to allow the pressurized feedstock/mixture to be moved from the second pump 17 to the processing section 3. The first and second valves 16, 19; first and second pumps 11, 17; and first and second rams 12, 18, all form part of the pressurizing section 2.

Although the indirect pressurization has been described in relation to a pump having a cylinder with a floating ram therein, other forms of pump can be used instead, as would be appreciated by a person skilled in the art.

Optionally, the system can be adapted to allow the feedstock 7 to be moderately preheated in the pressurizing section by including heating means (not shown) along a section of the conduit, or in other suitable locations.

The processing section 3 includes processing means for heating pressurized feedstock 7 to supercritical temperatures. Typically, the feedstock 7 will be heated to a temperature between 250°C and 400°C. However, it is envisaged that the system 1 can also be used to process feedstock 7 at temperatures outside this range.

The feedstock 7 is typically pressurized in the pressurizing section 2 but can alternatively or additionally, be pressurized or further pressurized in the processing section 3.

Processing means in the processing section 3 can include a processing or pressure vessel 20 having a first stage 21 and a second stage 22, and a first end 30 and a second end 31 that substantially opposes the first end 30. An opening is positioned at or near the first end 30 of the pressure vessel 20 and is connected to the outlet of the second valve 19.

The first stage 21 of the pressure vessel 20 is a first tube having a first end 27 that connects with the opening to form an inlet 28 to the pressure vessel 20. The first tube is positioned concentrically within a second tube that forms the casing of the pressure vessel 20. A space 26 (preferably an annular space) is provided between the outer peripheral surfaces of the first tube and the inner surfaces of the second tube. This space defines the second stage 22 within the processing vessel 20 and leads to the outlet 24.

The first tube is shorter than the processing vessel 20 and comprises a distal end 32 that terminates before the second end 31 of the processing vessel 20. A space is provided between the distal end 32 of the first tube and the second end 31 of the processing vessel 20. This space forms a reaction zone or reaction chamber 23 wherein pressurized, high temperature feedstock 7 reacts to form a raw product stream. The inlet 28, first stage 21, reaction zone 23, second stage 22, and outlet 24 form a fluid pathway along which the feedstock 7, and then the raw product stream, passes through the pressure vessel 20. The inner and outer surfaces of both the first and second tubes are heat transfer surfaces.

Each end 30, 31 of the processing vessel 20 is sealed, except where the inlet 28 enters the vessel 20 and where the outlet 24 exits the vessel. This arrangement allows the processing vessel 20 to be used as a pressure vessel in which the same pressure is maintained within the vessel.

In use, feedstock 7 (e.g., concentrated algae feedstock as disclosed herein) enters the first stage via the inlet 28. The feedstock 7 moves through the fluid flow path defined by the first stage 21 and is heated before reaching the reaction zone 23, wherein the feedstock 7 is further heated to a desired temperature with heating means 25 thereby causing the feedstock 7 to react to form a raw product stream.

The heating means 25 is configured to heat the pressurized feedstock 7 in the reaction chamber 23 up to between 250°C and 400°C. The heating means 25 may be in the form of an element or other suitable heating means. The heating means 25 may be inserted directly into the reaction chamber 23 to heat the feedstock 7 or it may be adapted to be located externally from the reaction chamber 23 so as to heat the walls of the processing vessel 20 at or near the location of the reaction chamber 23.

The heating means 25 may heat the pressurized algae feedstock 7 in the reaction chamber 23 by radiation, convection, conduction, electromagnetic radiation, including microwave and ultrasonic radiation, or any combination of such heating methods or by similar heating methods.

The raw product stream and any unreacted feedstock 7 then moves along the fluid flow path defined by the second stage 22 where the raw product stream is cooled to an ambient or near ambient temperature, preferably at or below 80°C, before being discharged from the processing section 3 via the outlet 24.

In effect, the first and second tubes 21, 22 form a counter-flow heat exchanger, with the first tube being made of a highly heat conductive material, such as a thin walled metal tube, to ensure a high heat transfer co-efficient. In addition, fins or other surface features that improve heat transfer may be incorporated onto or into the heat transfer surfaces of the processing vessel 20, tubes or reaction chamber 23.

The outlet 24 of the pressure vessel 20 is located on the periphery of the processing vessel 20 close to the inlet 28. However, it is envisaged that the outlet 24 could be located at other suitable locations on the processing vessel 20 depending on the internal arrangement of the vessel, as would be apparent to a person skilled in the art.

In one form, the volume of the processing vessel 20 is at least six times that of the swept volume of the second pump 17. This volume difference enables the feedstock 7 to be moved through the processing vessel 20 in intermittent stages as the pump 17 is actuated. That is, one cycle of the pump 17 would cause a single charge of feedstock 7 to move one sixth of the way through the processing vessel 20, thereby allowing for a longer residence time of the feedstock 7 within the processing vessel 20 than if the same charge of feedstock 7 was pushed into the processing vessel 20 with the actuation of the pump 17 and was drawn out of the processing vessel 20 with the next consecutive action of the pump 17. By allowing for a longer residence time, the feedstock 7 is able to be heated to the desired temperature easily and is given sufficient time to undergo the desired reaction within the processing vessel 20.

As mentioned above, the first and second tubes of the processing vessel 20 are preferably concentric, with the first tube being positioned inside the second tube and defining an annular space 26 between. However, it is envisaged that the first and second stages 21, 22 of the processing vessel 20 may be of different shapes and arrangements, as would be apparent to a person skilled in the art. For example, the processing vessel 20 could include a housing having an inlet and an outlet and a counter-flow heat exchange system in between. Such arrangements allow incoming feedstock 7 to be heated by heating means and by outgoing feedstock 7 that has already been heated. Similarly, the outgoing feedstock 7 is cooled by the incoming feedstock 7 and by being separated from or distanced from the heating means.

Alternatively, the processing vessel 20 may include any other suitable arrangement by which the feedstock 7 can be held under pressure whilst being heated and then cooled, as would be apparent to a person skilled in the art. The processing vessels 20 can be of different lengths to suit the particular raw material or feedstock 7 used and to suit the desired residence time in the processing vessel 20 and the desired outcome of the process. For example, in one embodiment, six or more processing vessels may be included, each being twice as long as the processing vessel of the embodiment shown in Fig. 5 and in parallel with each other. Each of these processing vessels may be equipped with an extra inlet valve in series with the individual inlets 28, so as to allow sequential charging of feedstock 7 optionally with a catalyst.

In the output section 4 of the system, the outlet 24 connects the processing vessel 20 to the output section 4 via a conduit. The discharged raw product stream moves along this conduit to the output section 4.

The output section 4 optionally includes a high pressure gas separator 40 for separating out gases from the raw product stream. In the embodiment in which a gas separator is used, the outlet 24 of the processing vessel 20 is connected with the inlet of the high pressure gas separator 40, which may be of a known type, so that the raw product stream moves from the processing vessel 20 to the gas separator 40 via a conduit. Any gases entrained, or formed in the processing vessel 20, and which remain within the feedstock 7, are able to exit the system by being purged from the gas separator through a purge valve 48 fluidly connected with the gas separator 40.

The output section 4 also includes a third valve 41 that is connected with the outlet 24 of the processing vessel 20 or with an outlet 42 of the gas separator, if the gas separator is included within the system 1. The third valve 41 is also fluidly connected with a third pump 44.

The third pump 44 is a high pressure pump that acts as both a depressurizing means and as a discharge pump. In particular, the third pump 44 includes a pump housing in the form of a cylinder within which a floating third ram 45 is located. One side of the ram 45 is in contact with the raw product stream as it enters the third pump 44. The other side of the ram is in contact with a pure fluid, such as water, which is the pressurized output of a separate conventional pumping system connected with the third pump 44. As the raw product stream enters the cylinder via the open third valve 41, the ram 45 presses against the pure fluid at the other end of the cylinder and the fluid is pushed out into a reservoir (not shown) via an open release valve at the pure fluid end of the cylinder.

The third valve 41 is controlled to open at the same time as the first valve 16 in the pressurizing section 2. This allows a charge of product to leave the processing section 3 at the same time as a charge of feedstock 7 enters the processing section 3, via the first valve 16, without significantly changing the pressure level in the processing section 3. A release valve 47 acts to automatically maintain the pressure within the third pump 44 at about the same pressure as in the processing section 3, and is created by the pump action of the second pump 17 as the second pump transfers the charge of feedstock into the processing section 3. When the transfer of the new charge of feedstock 7 is complete and the transfer of the latest charge of product is complete, both the second valve 19 and third valve 41 are closed. Further opening movement of the third ram 45 continues. This causes the capacity of the feedstock end of the cylinder to increase, thereby depressurizing the feedstock 7. Preferably, the raw product stream is depressurized to ambient or near ambient levels.

Any gases that were dissolved in the raw product stream and that were not purged in the gas separation stage can then be ejected via a relief valve 47, which is connected with the third pump 44 and which can also act to depressurize the raw product stream.

The third pump 44 is also connected with a fifth valve in the form of an outlet valve 46. This allows the depressurized raw product stream to be pumped by actuation of the third pump 44, out through the outlet valve 46, which is opened to allow the raw product stream to be discharged from the system.

Because the raw product stream is at an ambient or near ambient pressure, the outlet valve 46 is subject to less wear and is, therefore, more reliable than if the raw product stream was discharged through the outlet valve 46 under high pressure.

The relief valve 47 helps to reduce the pressure of the raw product stream in the third pump 44 after the third valve 41 has closed but before the outlet valve 46 has opened, so that rapid wear is avoided when the outlet valve 46 is opened.

The system and process of the present disclosure may be used with any suitable pumping systems. The form of pumping systems can be adapted to pressurize and depressurize the feedstock 7 or raw product stream by using indirect pressurizing means. The pumps are able to pressurize the feedstock 7 to high pressures and to depressurize the product to low pressures in an accurate way.

A particular advantage of using this form of pumping system is that the valves and sensitive component parts of the indirect pump are in contact with the fluid or water, which is clean, and are not in contact with the feedstock 7. The component parts of the pump are less likely to become clogged and worn by the raw materials and chemicals within the feedstock 7 that may be viscous, corrosive, dirty, or of a nature that is otherwise harmful to the component parts of the pumps and valves.

By pressurizing a pure fluid, such as pure water, the indirect pump can pressurize and depressurize the fluid in an accurate way, rather than if the impure feedstock 7 or raw product was pressurized directly. In effect, the pumps of the system of the present disclosure can operate reliably to raise and lower the fluids to an accurate pressure because a clean fluid with known properties is being pressurized and so the level of pressurization can take the known properties of the fluid into account. Therefore, the system and process of the present disclosure can be more accurately controlled than known systems and methods, which pressurize the feedstock and raw product stream directly.

Although a pure fluid in the form of pure water is preferred within the pumps in the system of the present disclosure, it is envisaged that other suitable fluids (even impure, but relatively clean fluids) may be used instead.

When the raw product leaves the processing vessel 20 by means of the product outlet 24, the temperature of the raw product stream has been reduced to at or near ambient temperatures, preferably below 80° Celsius and more preferably below 50°C. The third pump 44 and the valves 41, 46, and 47, in the outlet section 4 are, therefore, able to operate at near ambient temperatures with consequent advantages in: the performance of the components; low wear on the components; and prolonged equipment life. In particular, this results in the advantage that the equipment, valves, and pump components and materials can be chosen for their high sealing and pumping reliability and not simply because of their ability to withstand high temperatures (which is the limitation by which valves and component parts of pumps are chosen in prior art systems and processes).

In effect, the areas of the system of the present disclosure where the pressures are raised in the second pump 17 with the associated valves, and the areas of the system where the pressures are brought down to ambient levels, are free to utilize highly efficient materials and components to provide good sealing performance, without risking the effectiveness of those materials and components by subjecting them to high temperatures. The valves and pumps can, therefore, be of any specification capable of withstanding high pressures and corrosive chemicals without needing to withstand high temperatures as well. Thus, the system of the present disclosure avoids the need to use heat resistant valves in areas of high temperature.

Furthermore, the reaction zone 23, and the first and second stages 21, 22 of the processing means where the temperature is raised and lowered respectively, are maintained at constant pressure and can be made from suitable materials and components that can cope with these high temperatures without being required to use moveable seals, which would otherwise be required to change pressure and which are vulnerable to high temperatures.

Optionally, further separation can be conducted after the raw product stream is discharged from the outlet valve 46. In particular, the raw product stream can be separated to form one or more product sub-streams by solvent extraction as described with respect to FIG. 3, distillation, settling, membrane filtration, centrifuging, ion exchange, drying, evaporation, vacuum distillation/separation or any other suitable separation process or combination of processes as would be readily apparent to a person skilled in the art.

**EXAMPLES**

The following examples are included to demonstrate exemplary embodiments of the present disclosure. However, those of skill in the art should, in light of the present disclosure, appreciate that many changes can be made in the specific embodiments which are disclosed and still obtain a like or similar result without departing from the scope of the disclosure. The following examples are not intended to limit the scope of the present disclosure and they should not be so interpreted.

Example 1

Heat exchangers were charged with fresh algae. The heat exchanges were pre-heated up to a temperature of 80°C before commencing pumping. Various flow rates were trialed, from 1.05 L/min up to 10.8 L/min. The temperatures at which the heat exchangers stabilized are recorded in Table 1. The full spectrum of temperature values are provided in Table 1.

**Table 1: Empirical Temperatures and Calculated Values from Heat Exchanger Trials**

| Run | Flow (L/min) | m (kg/s) | $T_{in}$ | $T_2$ | $T_3$ | $T_{out}$ | $Q_E$(J/s) | $dT_{avg}$ | $U_E$ |
|---|---|---|---|---|---|---|---|---|---|
| 4/09/2009 | 3.00 | 0.05 | 11 | 46 | 87 | 43 | 8566.95 | 36.5 | 33 |
| 4/09/2009 | 1.65 | 0.0275 | 12 | 50 | 92 | 45 | 4826.745 | 37.5 | 18 |
| 23/11/2009 | 10.80 | 0.18 | 16 | 24 | 35 | 26 | 8274.42 | 10.5 | 110 |
| 23/11/2009 | 7.80 | 0.13 | 16 | 27 | 46 | 34 | 10322.13 | 18.5 | 78 |
| 24/11/2009 | 3.15 | 0.0525 | 18 | 55 | 86 | 43 | 6801.323 | 28 | 34 |
| 24/11/2009 | 1.05 | 0.0175 | 18 | 54 | 84 | 45 | 2193.975 | 28.5 | 10 |

Table 1 provides a wide range of U values. This is associated with a number of assumptions made in the calculations, including: treating two individual heat exchangers as one unit, assuming the liquid behaves as water, and ignoring heat losses and areas associated with the connecting pipe work.

In Table 1, the U value increases with increased flow rate. This is due to the greater velocity associated with high flow rates, which acts to remove the heat from a boundary.

It is also noted that in one case the $Q_E$, calculated heat input, exceeds the 9kW capacity of the heater. Flow measurement techniques are limited and therefore contribute to potential inaccuracies in the calculated results.

Prior trials (Heat Exchanger Commissioning Report.doc, 08-09-09) indicate that the flow rate, which enabled successful heat exchange, was between 1.7 and 3.3 L/min.

The existing assumption for U is 200 W/m$^2$K. The U values in Table 1 which fall within the flow range referenced above, are in the order of 20-35 W/m$^2$K. A value of 30 was therefore selected as the heat transfer coefficient based on empirical results.

The size of the expanded heat exchanger required to manage a flow of 10 L/min is 25 m$^2$. The calculations are shown below. These calculations are based on the assumption that algae behaves similarly to water. An expanded heat exchanger that is a tall cylinder of multiple, single-pass tubes will be constructed. The expanded heat exchanger will fit within an area of 1 m long x 0.55 m deep x 2.4 m high.

| Assumptions: | Mass flow (assuming water) | = 10 kg/min |
|---|---|---|
| | | = 0.167 kg/s |
| | Cp (assuming water @ 30° C) | = 4.179 kJ/kgK |

At a flow rate of 10 L/min, 7kW from the heater raises the temperature by x degrees.

$$\Delta T = Q / mCp$$

$$= 7 / (0.167 \times 4.179)$$

$$= 10.03$$

If desired heater outlet temperature (T3) is 100° C then

$$T2 = 100-10$$

$$= 90°C$$

Cold algae goes into the heater at 15°C and is raised to T2, which requires 7 kW at a flow of 10 L/min.

$$Q = mCp\Delta T1 \qquad \Delta T_1 = 90-15 = 75$$

$$= 0.167 \times 4.179 \times 75$$

$$= 52 \, kW$$

Therefore the new heat exchanger area to handle 52 kW with U = 30 kJ/kgK

$$Q = UA\Delta T1$$

$$A = Q / U\Delta T1$$

$$= 52,000 / (30 \times 75)$$

$$= 23.1 \, m^2$$

A factor of safety would be applied a 25 m$^2$ expanded heat exchanger would be utilized.

Example 2

In this example, algae were processed by the system and process of the present disclosure. Between 50 % and 98% water was left in the algae to form a pumpable feedstock.
An additive of 5% $Na_2CO_3$ was added and the feedstock and additive mixture was processed at about 340° C and at about 200 bar with 800 seconds between charges.
The raw product stream contained kerogen, which had a 37% yield of light crude oil and also contained waste that included $Na_2CO_3$. Thus, the system and process of the present disclosure was used to produce material from which an alternative fuel similar to mineral crude oil could be produced.

Example 3

Waste water treatment plant biosolids were processed using two processes, one with no additive at 250°C and another using sodium carbonate as the additive at 300°C. Both processes operated at a pressure of 150 bar with a charge time of 1500 seconds.
The yield was a very poor 0.9% oil recovery without additive. An oil recovery rate of 1.8% was achieved with the sodium carbonate additive.

Example 4

A sample of kelp seaweed was obtained in a wet freshly harvested form and was used as the raw material to be processed. After draining out all free sea water, the kelp was reduced to a pumpable pulp in a Blackfriars mill. The analysis of dry mass at this stage was 18% dry matter, with the remainder being sea water.
This pulp feedstock was then mixed with an additive of calcium carbonate and processed at 320°C at a pressure of 200 bar and with a charge time of 1500 seconds.
The raw product stream was a typical sludge that yielded a crude oil after extraction with a solvent.

Example 5

In a plant with a hydrothermal reactor system based upon an embodiment of the present disclosure, the plant utilizes pressure raising and pressure reducing technology and components using six reaction vessels arranged in parallel, with each processing vessel being identical to the processing vessel/pressure vessel 20 shown in Fig. 5.
Testing with an algae feedstock has yielded a raw product stream with an average of 18% oil content using algae as a dry matter feedstock. The operating conditions used a temperature of approximately 320°C, a pressure of 150 bar, and a 700 second cycle time. An additive of about 5% sodium carbonate was mixed with the algae feedstock before processing.
In one embodiment, sodium carbonate or calcium carbonate was added to the feedstock to form a feedstock and additive mixture that contains at least 5% additive.
Variations and modifications to the preferred embodiments of the invention described herein will be apparent to those skilled in the art. It is intended that such variations and modifications can be made without departing from the scope of the invention and without diminishing its attendant advantages.
All of the systems, processes, methods and compositions disclosed and claimed herein can be made and executed without undue experimentation in light of the present disclosure. While the systems, processes, methods and compositions of this invention have been described in terms of preferred embodiments, it will be apparent to those of skill in the art that variations may be applied to the systems, processes, methods and compositions and in the steps or in the sequence of steps of the methods described herein without departing from the scope of the invention. All such similar substitutes and modifications apparent to those skilled in the art are deemed to be within the present disclosure as defined by the appended claims.

**Claims**

1. A continuous process of producing fuel from an organic feedstock comprising algae, the process comprising the steps of:

    pre-processing the organic feedstock (53) to increase the concentration of the algae to greater than or equal to 30% by weight of the organic feedstock (53), wherein the pre-processing steps comprise:

      (a) pre-heating the organic feedstock (53) by passing the feedstock (53) through a heat exchanger (70) and then further heating the organic feedstock to a desired temperature in a heater (71) for a period of time so as to effectively disintegrate the cell walls of the algae;
      (b) cooling the heated organic feedstock by passing the feedstock (53) backwards through the heat exchanger (70); and
      (c) removing excess water from the organic feedstock (53) in a decanter (73) to produce a concentrated pumpable organic feedstock (53) of about 30-50% algae; and

    further processing the concentrated pumpable organic feedstock (53) by:

      (d) adding at least one additive (14a, 64a) to the pre-processed organic feedstock (53); and
      (e) processing the pre-processed organic feedstock (53) by pressurizing and heating the pre-processed organic feedstock (53) to convert at least a portion of the algae to a fuel; and
      (f) extracting the fuel from the pre-processed and processed organic feedstock (53).

2. The continuous process as recited in claim 1, wherein the organic feedstock (53) is pre-heated to a temperature of approximately 55°C in the heat exchanger (70).

3. The continuous process as recited in any one of the preceding claims, wherein at step (a) the organic feedstock (53) is heated to a temperature over 75°C for approximately 90 seconds in the heater (71).

4. The continuous process as recited in any one of the preceding claims, wherein at step (c), biosolids are removed from residual water in the organic feedstock (53) using centrifuge means.

5. The continuous process as recited in any one of the preceding claims, wherein at step (e), the pre-processed organic feedstock (53) is pressurised to a pressure between 100 - 350 bar and heated to a temperature between 250 - 400°C.

6. The continuous process as recited in any one of the preceding claims, wherein at step (f), the fuel is extracted by contacting the pre-processed and processed organic feedstock (53) with a solvent.

7. The continuous process as recited in claim 6, wherein the solvent is at least one solvent selected from the group consisting of: hexane, kerosene, ethylene, propylene, butene-1, ethane, propane, butane, isobutane, pentane, heptane, octane, 2,2-dimethylbutane, 2,3-dimethylbutane, 2,2-dimethylheptane, 2,5-dimethylhexane, 2,2-dimethylpentane, 2,3-dimethylpentane, 2,4-dimethylpentane, 3,3-dimethylpentane, 3-ethylpentane, hexamethylethane, 2-methylbutane, 2-methylhexane, 2-methylpentane, 3-methylpentane, cyclohexane, methylcyclopentane, 1,2,3,4-tetrahydronaphthalene hexene-1, heptene-1, octene-1, nonene-1, decene-1, 4-methyl-1-pentene benzene, toluene, and xylene.

8. The continuous process as recited in claim 6 or 7, wherein, at step (f) the pre-processed and processed organic feedstock (53) is contacted with a solvent in a column (80) facilitating countercurrent flow between the pre-processed and processed organic feedstock (53) and the solvent.

9. The continuous process as recited in any one of the preceding claims, wherein extracting the fuel from the pre-processed and processed organic feedstock (53) comprises at least one separation process selected from the group consisting of: distillation, settling, membrane filtration, decantation, centrifugation, ion exchange, drying, evaporation, and vacuum distillation.

10. The continuous process as recited in any one of the preceding claims, wherein the additive (14a, 64a) comprises at least one additive selected from the group consisting of: calcium carbonate, sodium carbonate, sodium hydroxide, calcium salt, hydroxides, and bicarbonates.

**Patentansprüche**

1. Durchgehendes Verfahren zum Erzeugen von Kraftstoff aus einem organischen Ausgangsmaterial, das Algen umfasst, wobei das Verfahren die folgenden Schritte umfasst:

Vorverarbeiten des organischen Ausgangsmaterials (53), um die Konzentration der Algen auf mehr als oder gleich 30 Gewichts-% des organischen Ausgangsmaterials (53) zu erhöhen, wobei die Vorverarbeitungsschritte Folgendes umfassen:

(a) Vorerwärmen des organischen Ausgangsmaterials (53), indem das Ausgangsmaterial (53) durch einen Wärmetauscher (70) gegeben wird, und dann weiteres Erwärmen des organischen Ausgangsmaterials auf eine gewünschte Temperatur in einer Heizung (71) über einen Zeitraum, um die Zellwände der Algen effektiv zu zersetzen;
(b) Kühlen des erwärmten organischen Ausgangsmaterials, indem das Ausgangsmaterial (53) rückwärts durch den Wärmetauscher (70) gegeben wird; und
(c) Entfernen von überschüssigem Wasser von dem organischen Ausgangsmaterial (53) in einem Dekanter (73), um ein konzentriertes pumpbares organisches Ausgangsmaterial (53) aus ungefähr 30-50 % Algen zu erzeugen; und

weiteres Verarbeiten des konzentrierten pumpbaren organischen Ausgangsmaterials (53) durch:

(d) Hinzufügen von zumindest einem Zusatzstoff (14a, 64a) zu dem vorverarbeiteten organischen Ausgangsmaterial (53); und

(e) Verarbeiten des vorverarbeiteten organischen Ausgangsmaterials (53), indem das vorverarbeitete organische Ausgangsmaterial (53) unter Druck gesetzt und erwärmt wird, um zumindest einen Teil der Algen in einen Kraftstoff umzuwandeln; und

(f) Extrahieren des Kraftstoffes aus dem vorverarbeiteten und verarbeiteten organischen Ausgangsmaterial (53).

2. Durchgehendes Verfahren nach Anspruch 1, wobei das organische Ausgangsmaterial (53) in dem Wärmetauscher (70) auf eine Temperatur von ungefähr 55 °C vorerwärmt wird.

3. Durchgehendes Verfahren nach einem der vorhergehenden Ansprüche, wobei in Schritt (a) das organische Ausgangsmaterial (53) in der Heizung (71) ungefähr 90 Sekunden auf eine Temperatur über 75 °C erwärmt wird.

4. Durchgehendes Verfahren nach einem der vorhergehenden Ansprüche, wobei in Schritt (c) Biofeststoffe aus Restwasser in dem organischen Ausgangsmaterial (53) unter Verwendung von Zentrifugenmitteln entfernt werden.

5. Durchgehendes Verfahren nach einem der vorhergehenden Ansprüche, wobei in Schritt (e) das vorverarbeitete organische Ausgangsmaterial (53) zu einem Druck zwischen 100-350 bar unter Druck gesetzt und auf eine Temperatur zwischen 250-400 °C erwärmt wird.

6. Durchgehendes Verfahren nach einem der vorhergehenden Ansprüche, wobei in Schritt (f) der Kraftstoff extrahiert wird, indem das vorverarbeitete und verarbeitete organische Ausgangsmaterial (53) mit einem Lösungsmittel kontaktiert wird.

7. Durchgehendes Verfahren nach Anspruch 6, wobei das Lösungsmittel zumindest ein Lösungsmittel ist, das aus der Gruppe ausgewählt ist, die aus Folgendem besteht: Hexan, Kerosin, Ethylen, Propylen, Buten-1, Ethan, Propan, Butan, Isobutan, Pentan, Heptan, Octan, 2,2-Dimethylbutan, 2,3-Dimethylbutan, 2,2-Dimethylheptan, 2,5-Dimethylhexan, 2,2-Dimethylpentan, 2,3-Dimethylpentan, 2,4-Dimethylpentan, 3,3-Dimethylpentan, 3-Ethylpentan, Hexamethylethan, 2-Methylbutan, 2-Methylhexan, 2-Methylpentan, 3-Methylpentan, Cyclohexan, Methylcyclopentan, 1,2,3,4-Tetrahydronaphthalenhexen-1, Hepten-1, Octen-1, Nonen-1, Decen-1, 4-Methyl-1-pentenbenzol, Toluol und Xylol.

8. Durchgehendes Verfahren nach Anspruch 6 oder 7, wobei in Schritt (f) das vorverarbeitete und verarbeitete organische Ausgangsmaterial (53) mit einem Lösungsmittel in einer Säule (80) kontaktiert wird, die den Gegenstromfluss zwischen dem vorverarbeiteten und verarbeiteten organischen Ausgangsmaterial (53) und dem Lösungsmittel vereinfacht.

9. Durchgehendes Verfahren nach einem der vorhergehenden Ansprüche, wobei das Extrahieren des Kraftstoffes aus dem vorverarbeiteten und verarbeiteten organischen Ausgangsmaterial (53) zumindest ein Trennverfahren umfasst, das aus der Gruppe ausgewählt ist, die aus Folgendem besteht: Destillation, Absetzen, Membranfiltration, Dekantierung, Zentrifugation, Ionenaustausch, Trocknen, Verdampfung und Vakuumdestillation.

10. Durchgehendes Verfahren nach einem der vorhergehenden Ansprüche, wobei der Zusatzstoff (14a, 64a) zumindest einen Zusatzstoff umfasst, der aus der Gruppe ausgewählt ist, die aus Folgendem besteht: Calciumcarbonat, Natriumcarbonat, Natriumhydroxid, Calciumsalz, Hydroxiden und Bicarbonaten.

**Revendications**

1. Procédé en continu pour produire du carburant à partir d'une charge organique comprenant des algues, le procédé comprenant les étapes de :

prétraitement d'une charge organique (53) pour augmenter la concentration des algues à 30 % en poids ou plus de la charge organique (53), dans lequel les étapes de prétraitement comprennent :

(a) le préchauffage de la charge organique (53) par passage de la charge (53) à travers un échangeur de chaleur (70) et ensuite encore le chauffage de la charge organique à une température souhaitée dans un dispositif chauffant (71) pendant une certaine période de temps de façon que les parois cellulaires des algues soient efficacement désintégrées ;

(b) le refroidissement de la charge organique chauffée par passage de la charge (53) à l'envers à travers l'échangeur de chaleur (70) ; et

(c) élimination de l'eau en excès de la charge organique (53) dans un décanteur (73) pour produire une charge organique pompable concentrée (53) d'environ 30 à 50 % d'algues ; et

en outre traitement de la charge organique pompable concentrée (53) par :

(d) l'addition d'au moins un additif (14a, 64a) à la charge organique prétraitée (53) ; et

(e) le traitement de la charge organique prétraitée (53) par pressurisation et chauffage de la charge organique prétraitée (53) pour convertir au moins une partie des algues en un carburant ; et

(f) l'extraction du carburant à partir de la charge organique prétraitée et traitée (53).

2. Procédé en continu selon la revendication 1, dans lequel la charge organique (53) est préchauffée à une température d'environ 55°C dans l'échangeur de chaleur (70).

3. Procédé en continu selon l'une quelconque des revendications précédentes, dans lequel, dans l'étape (a), la charge organique (53) est chauffée à une température supérieure à 75°C pendant environ 90 secondes dans le dispositif chauffant (71).

4. Procédé en continu selon l'une quelconque des revendications précédentes, dans lequel, dans l'étape (c), les biosolides sont éliminés de l'eau résiduelle dans la charge organique (53) par utilisation d'un moyen de centrifugation.

5. Procédé en continu selon l'une quelconque des revendications précédentes, dans lequel, dans l'étape (e), la charge organique prétraitée (53) est pressurisée à une pression entre 100 et 350 bars et chauffée à une température entre 250 et 400°C.

6. Procédé en continu selon l'une quelconque des revendications précédentes, dans lequel, dans l'étape (f), le carburant est extrait par mise en contact de la charge organique prétraitée et traitée (53) avec un solvant.

7. Procédé en continu selon la revendication 6, dans lequel le solvant est au moins un solvant choisi dans le groupe constitué par : l'hexane, le kérosène, l'éthylène, le propylène, le butène-1, l'éthane, le propane, le butane, l'isobutane, le pentane, l'heptane, l'octane, le 2,2-diméthylbutane, le 2,3-diméthylbutane, le 2,2-diméthylheptane, le 2,5-diméthylhexane, le 2,2-diméthylpentane, le 2,3-diméthylpentane, le 2,4-diméthylpentane, le 3,3-diméthylpentane, le 3-éthylpentane, l'hexaméthyléthane, le 2-méthylbutane, le 2-méthylhexane, le 2-méthylpentane, le 3-méthylpentane, le cyclohexane, le méthylcyclopentane, le 1,2,3,4-tétrahydronaphtalène, l'hexène-1, l'heptène-1, l'octène-1, le nonène-1, le décène-1, le 4-méthyl-1-pentène, le benzène, le toluène, et le xylène.

8. Procédé en continu selon la revendication 6 ou 7, dans lequel, dans l'étape (f), le charge organique prétraitée et traitée (53) est mise en contact avec un solvant dans une colonne (80) facilitant un écoulement à contre-courant entre la charge organique prétraitée et traitée (53) et le solvant.

9. Procédé en continu selon l'une quelconque des revendications précédentes, dans lequel l'extraction du carburant à partir de la charge organique prétraitée et traitée (53) comprend au moins un traitement de séparation choisi dans le groupe constitué par : une distillation, une sédimentation, une filtration sur membrane, une décantation, une centrifugation, un échange d'ions, un séchage, une évaporation, et une distillation sous vide.

10. Procédé en continu selon l'une quelconque des revendications précédentes, dans lequel l'additif (14a, 64a) comprend au moins un additif choisi dans le groupe constitué par : le carbonate de calcium, le carbonate de sodium, l'hydroxyde de sodium, un sel de calcium, les hydroxydes, et les bicarbonates.

FIG. 1

Prepare a pumpable feedstock or slurry from a raw meterial.

Optionally introduce an additive to the feedstock.

Pressurize the feedstock/additive mixture to between 100 bar and 350 bar.

Transfer the pressurized feedstock and additive mixture to a processing means.

Raise the temperature of the pressurized feedstock/additive mixture to between 250° C and 400° C within the processing vessel to form a pressurized raw product stream.

Cool the raw product stream within the processing means to ambient or near ambient temperatures

Optionally separate the gases from the raw product stream using a gas separator.

Depressurize the raw product stream prior to discharging the product stream from the system.

# FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009064204 A
- WO 2010030197 A